# EUROPEAN PATENT SPECIFICATION

(11) **EP 0 792 551 B1**
(45) Date of publication and mention of the grant of the patent: **08.09.2004**
(21) Application number: 95937905.8
(22) Date of filing: 13.11.1995
(51) Int. Cl.: H04M 15/00, G07F 19/00

(54) **METHOD AND TELECOMMUNICATION SYSTEM FOR CHARGING A USER**
VERFAHREN UND TELEKOMMNIKATIONSSYSTEM FÜR BENUTZERGEBÜHRENABRECHNUNG
PROCEDE ET SYSTEME DE TELECOMMUNICATIONS DE TAXATION A L'UTILISATEUR

(30) Priority: 14.11.1994 FI 945346
(43) Date of publication of application: 03.09.1997
(73) Proprietor: TeliaSonera Finland Oyj, 00510 Helsinki (FI)
(72) Inventor: GRÖNBERG, Jani, FIN-00900 Helsinki (FI); KARJALAINEN, Ulla, FIN-00610 Helsinki (FI); KOSONEN, Martti, FIN-00530 Helsinki (FI); NODBERG, Marko, FIN-00900 Helsinki (FI); MIETTINEN, Jarmo, FIN-00370 Helsinki (FI); TUOMISTO, Elina, FIN-02170 Espoo (FI)
(74) Representative: Simmelvuo, Markku Kalevi
(86) International application number: PCT/FI1995/000622
(87) International publication number: WO 1996/015616

(56) References cited:
- EP-A- 0 540 234
- EP-A- 0 572 991
- GB-A- 2 171 877
- US-A- 5 136 632
- US-A- 5 148 474
- US-A- 5 181 238
- US-A- 5 323 448
- US-A- 5 353 335

## Description

This invention relates to telecommunications and data transmission in a telenetwork. Particularly the present invention relates to a method for charging of a user of a telecommunication network, especially of the one using a computer equipment offering paid services. The invention relates also a telecommunication system for charging of a user of a telecommunication network, especially of a telecommunication system, including subscriber devices and a computer equipment offering paid services for the subscriber devices of a telecommunication system, for debiting of a customer.

This invention relates also to an electronic payment system, by which a payment that is comparable to a cash payment can be given to the vendor. The invention can be used especially for the payment of the services used in the telecommunication and data transmission taking place in telecommunication networks and also the ones offered in the telenetworks, as for instance payment of the data searches, but the method according to the invention can also be applied to services of another type, as for the payment of newspaper subscriptions and other similar charges.

It is a well-known practice to use charging methods to be utilized in telecommunication networks and based on the identification of the user for example by his or her credit card number or the identification number. When the user has announced his identification number and the secret code (PIN, Personal Identification Number) for the account associated with it, paid services are offered to the customer according to his or her selection and debited from the customer's account. The disadvantage of these known solutions is that by them the customer can buy services only from the particular computer, for which he has a user symbol. Thus the customer cannot buy services from the computer he has randomly selected, if he does not take a contact to the operator of the computer in question or the service offerer in order to get the user symbol. The solutions based of the credit card number require in their part the use of complicated encryption systems in order to be certain that the credit card number informed by the customer will not end up to outsiders. The problem of such encryption systems is that their creation in telecommunication networks is difficult.

An example of such a prior art charging is disclosed by US-A-5136632. This publication discloses a telephone service payment system using a sound emitting token. The system includes computers affiliated to a particular service such as weather forecasts or betting on horse racing. The system further includes an accounts management computer. The accounts management computer and the computers affiliated to services are maintained by the same party. Thus the system has the above-referenced disadvantage of the user having to arrange a prepaid account separately for each service provider, since a given account is specific to one service provider and cannot be used with any other service provider.

Another example of such a prior art charging is disclosed by GB-A-2171877. This publication discloses a telephone system for enabling prepayment for telephone calls. Again the system has the above-referenced disadvantage of the user having to arrange a prepaid account separately for each service provider, since a given account is specific to one service provider and cannot be used with any other service provider.

The object of this invention is to offer a simple and reliable charging method. This object is attained by the method according to the invention, the characteristic features of which have been shown in the characteristic part of the independent claim 1.

The object of the invention includes also a telecommunication system, in which the method according to the invention can be applied. The characteristic features of the telecommunication system according to the invention have been presented the characteristic part of the enclosed independent claim 8.

The term "account register" means in the present invention both a computer equipment, by which an account register can be maintained, and the register itself or the database, in which the accounts are kept.

The invention is based on the idea that when at the disposal of a customer is given against a special charge an account in a predetermined account register, the utilization of which requires only the knowledge of the identification number for the account and the secret code. The method according to the invention is thus based on the use of this identification number and the secret code including the compensation in accordance with the prepaid monetary value, by which a charge can be paid for the used telecommunication and data transmission time as well as chargeable services and/or products purchased via the telenetwork. The identification number and the secret code are advantageously sold in the form of a card and in order to create connections the user calls to the call number of a predetermined service and gives his or her identification number and secret code, which means that a physical card is not necessary for the creation of the connection. According to the invention the validity of the identification number and the secret code is checked and also the monetary compensation remaining in the account. The present invention combines thus the predebiting and the freedom to use all kinds of terminal devices connected with the telenetwork, as telephones and computer equipment, for the creation of a connection.

With the present invention the customer may in future pay the telecommunication services used by him in a very simple way - by announcing to an occasional service offerer the identification number of his account and the secret code, whereby the service producer may get a payment comparable with the cash payment using the teleoperator maintaining the account register as an intermediary. For instance in a telecommunication network the customer may thus buy services also from the computers of such service producers, for which he has not any identification number. The computer of the service producer sends then a debiting message to the customer's account register, in which the combination of the identification number for the account and the secret code informed by the customer will be verified. If in the account register there is then discovered an account, the identification number and the secret code of which coincide with the identification number and the secret code announced by the customer, the sum debited by the service offerer will be charged in the account register from the account informed by the customer, so that this sum can be compensated to the service producer in a way separately agreed. The sum paid by the customer will be then carried to the account of the service producer in such a way, that the operator can compensate it to the service producer e.g. by depositing the portion of the sum belonging to the service producer directly into his or her bank account.

The computer of the service producer will not participate in this case in any way in the authentication of the user or the account apprised by him, but this action is entirely effected in the account register.

If the accounts in the account register are also made as disposable, so that it is not possible to deposit more money in the accounts, but these accounts are discarded, when the money amount determined upon their creation has been exhausted, the expenses caused for the user by the information leak and the misuse of the account associated with it are minimized. Or as the sum in the beginning has been one hundred marks, the customer cannot lose more, though some third party would find out the identification number and the secret code of his account.

The most significant advantages of the method and the system according to the invention are therefore expressed in that the service producer cannot debit the user, though there is no agreement between the user and the service producer about the manner by which the bills are paid, that it is not necessary for the service producer to know the identity of the customer in order to succeed in the invoicing, that the customer can pay for the services to several service producers by having an account in only one account register, and that the customer must not have any payment cards at his or her disposal or corresponding means depending on the equipment, but it is enough that the customer knows the identification number and the secret code of one account in the account register.

According to a particularly advantageous embodiment of the invention the value of the monetary compensation in the account register is essentially reduced in real time during the connection and/or the electrical trading.

Preferred embodiments of the method and the telecommunication system according to the invention are described in the accompanying subclaims 2-10 and 12-16.

The invention will be described in detail in the following referring to the enclosed drawings, in which:
FIG. 1 shows a flowchart of the first advantageous embodiment of the method according to the invention;
FIG. 2 shows a block diagram of the first advantageous embodiment of the telecommunication system according to the invention;
FIG. 3 shows a block diagram of the second advantageous embodiment of the telecommunication system according to the invention; and
FIGS. 4-7 show as an example a third preferred embodiment of the invention having an intelligent network base (IN-platform) as the realization base, and of which

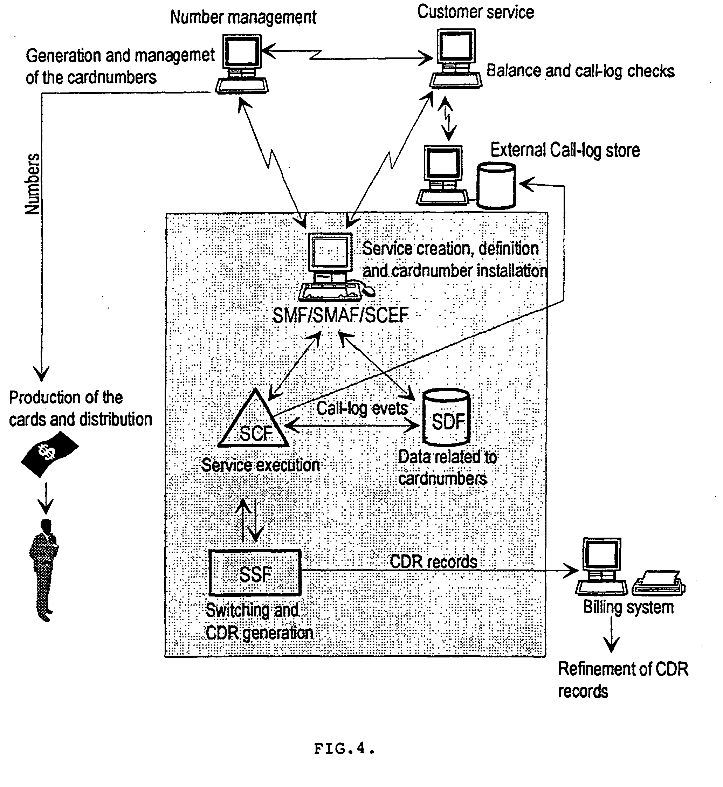

FIG. 4 shows the relationships between the activities;

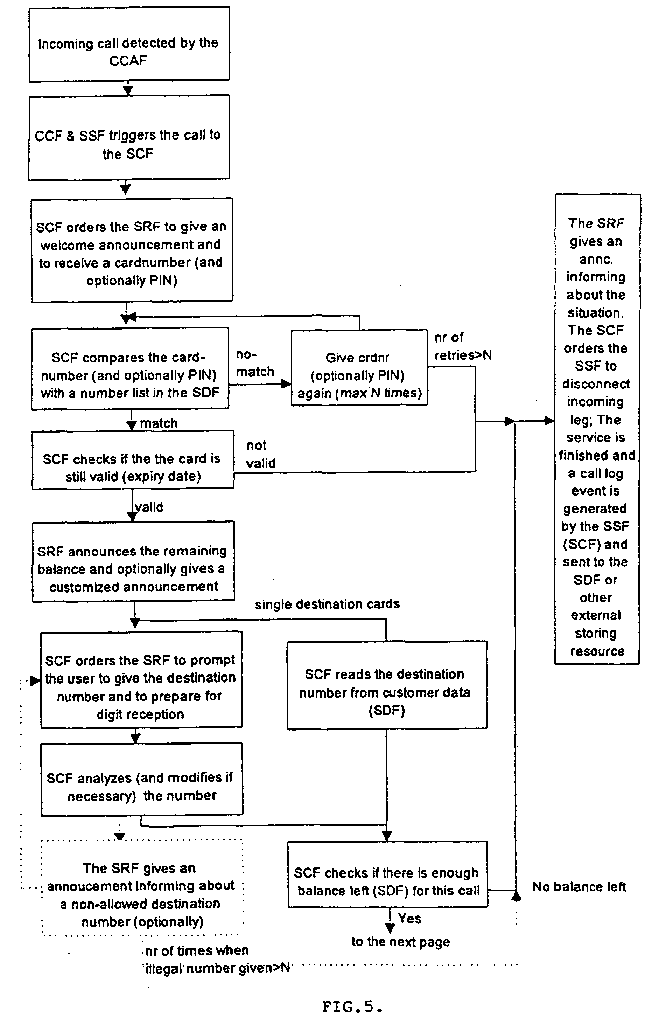

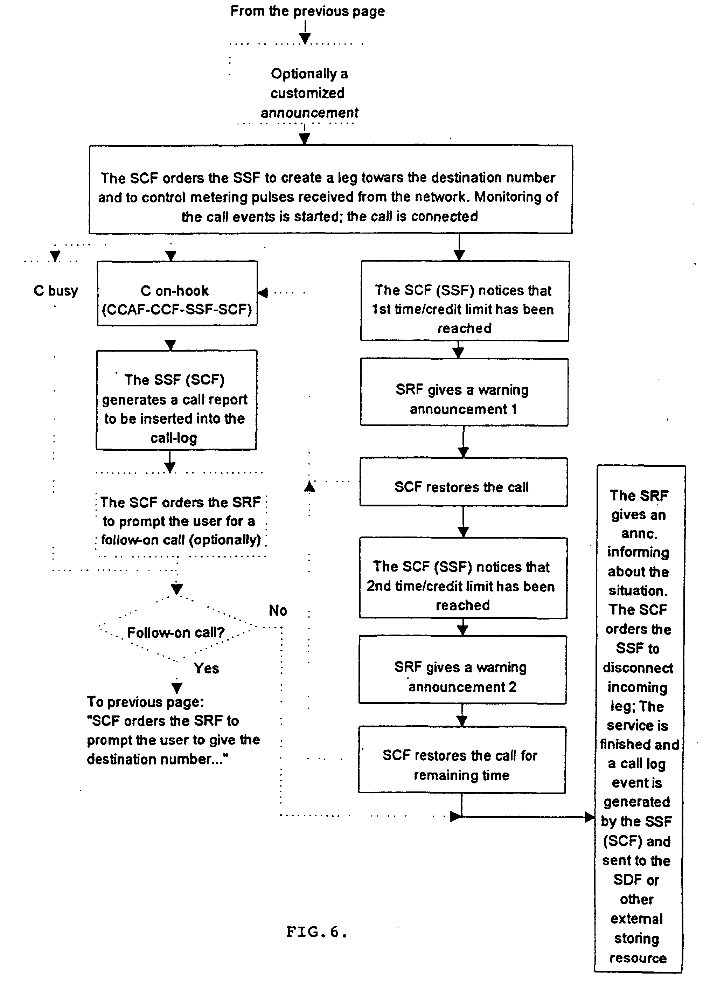

FIGS. 5 and 6 show the processing procedure of the connection; and

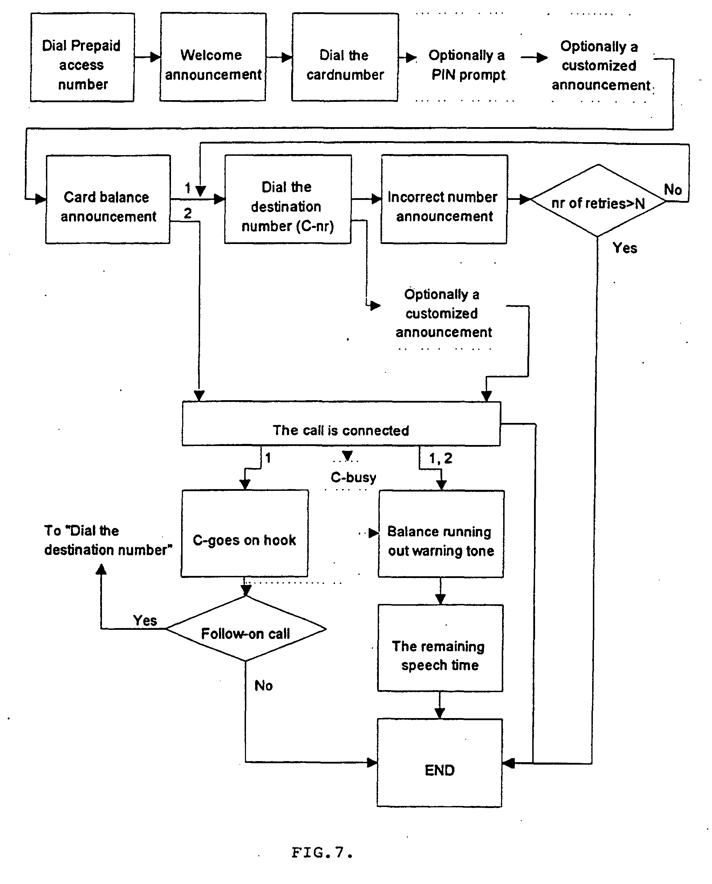

FIG 7 shows the user interface.

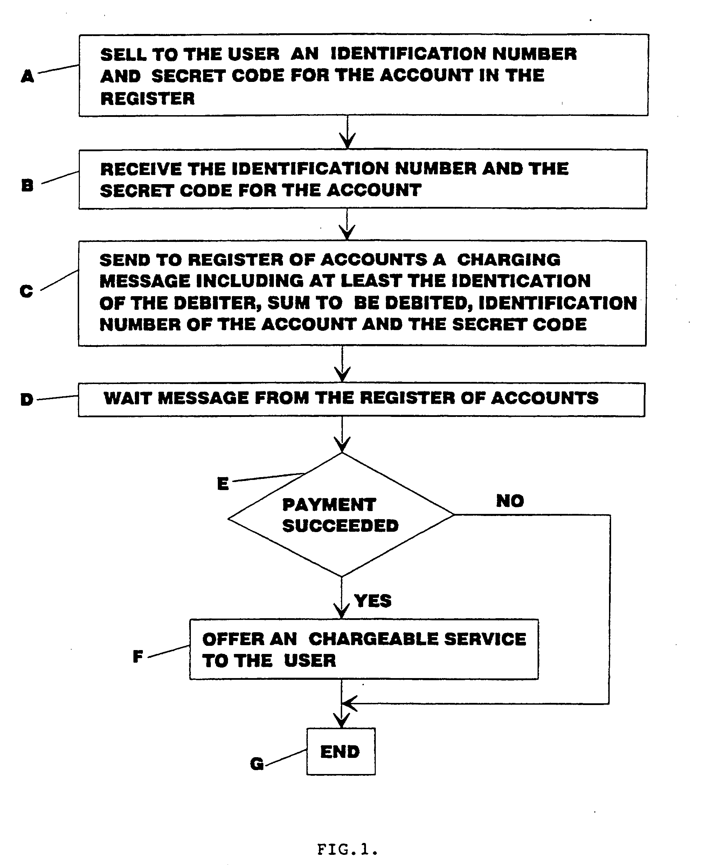

FIG. 1 shows a flowchart of the first advantageous embodiment of the method according to the invention. In the block A of FIG. 1 the operator of the account register establishes in the account register a new account, for which he determines the identification number, the secret code (PIN) and the monetary amount available, for example 100,-. After this the operator cam output an account card on paper provided with the identification number and the secret code. The operator sells the account card to a prospective buyer, who pays for the card the price the operator asks, e.g. 100,- (if the operator is not willing in this trading to receive any profit from the user). After this the buyer of the account card or any other person knowing the identification number and the secret code of the account may use the account in question for payments, until the monetary amount in the account has totally been used up or the latest expiration date of the card has been exceeded. No markings are therefore needed in the account register indicating the holder of a certain account. If the account in question is of disposable type, no additional money can be deposited in the account, but the user must buy another account card for himself having another identification number, when the means in the first account have been exhausted. Consequently for instance if one's account card is lost or if the identification number and the secret code of the account fall into the hands of a third party, only the economical loss of no more than the purchase price of the account card is caused for the user.

If it is desired to have larger deposit sums for the accounts in the account register (e.g. several thousands marks), it is possible to establish two different secret codes for the accounts in question. In this case the first secret code is used for the payment of bills and the second secret code (which the account holder should keep in a safe place) is used to exchange the first secret code in the account register.

When the user has contacted for instance by a telecommunication network to the computer offering commercial services and he wants to pay the services by using the account register, he entries into the computer the identification number and the secret code of his account in the block B. This may.happen for example in such a way that the customer contacts with his computer terminal a specified commercial server (computer), whereby the server in question asks the customer upon making the connection to announce the identification number and the secret code of his account and is waiting, until it receives the telecommunication the identification number and the secret code of the account sent by the customer from his terminal.

In the block C the server sends a debiting message to the account register. If the server in question has been programmed so that there are several different account registers, through which its chargeable services can be paid, this server decides for instance on the grounds of the identification number of the account announced to it, to which server this debiting message should be sent.

The debiting message sent by the server comprises at least the identification number and the secret code of the account informed by the customer. Additionally this debiting message may include among other things a product symbol for the service the user is paying and the telecommunication address of the user.

If the debiting message includes the telecommunication address of the user, the account register may essentially impede the misuse of an account in the account register for instance so that if to the account register comes within a specified time limit (e.g. 5 minutes) a certain amount (e.g. 5 pcs) of debiting messages, which have the same telecommunication address of the user, but the identification number and/or the secret code included in the message are wrong, the account register may reject all the debiting messages for instance during the next hour including the same telecommunication address in question. Therefore for example a "hacker" trying with repeated efforts to find out the secret code of a specified account, cannot make more than a few "breaking attempt" in an hour, whereat it is very improbable that he could discover the correct secret code.

In the block D the server waits for the confirmation indicating the successful or unsuccessful payment. If the payment has not been succeeded, transfer is made directly from block E to the block G, whereby the server states that the customer has not paid the required payment and that he does not therefore offer paid services to the customer.

If, on the contrary, a message is received, according to which the payment has been succeeded, a transfer is made to the block F, in which chargeable services in the server are offered to the customer.

If the service desired by the customer from the server has been classified as a disposable one, the server can function only so that it debits upon the contact-making a single payment through the account register, whereafter the customer may use the service it has chosen and paid in advance as long as he wants. The customer makes therefore a real-time payment for the service used by him.

If, on the contrary, a time debiting has been specified for the service desired by the customer, the server may send the first debiting message to the account register immediately after the connection-making, whereafter the customer has the right to use the service under the payment for instance during ten minutes. When the paid time (or in this case ten minutes) has been exhausted the server sends a new debiting message to the account register, in which again the sum included in the debiting message is charged from the customer's account, whereafter the customer has again ten minutes of the connection time at his disposal. If it is desired to make the charging of the service based on the time debiting as a real-time invoicing, the above-mentioned time period can be specified as a very short one, e.g. lasting only some milliseconds or a second. Therefore debiting messages are sent to the account register with very short intervals, whereby the charging of the customer takes place on the real-time basis.

By the above-mentioned way the customer may utilize the chargeable service, until the monetary amount in his or her account has been exhausted, whereat the server cut off the use of the chargeable service for the customer.

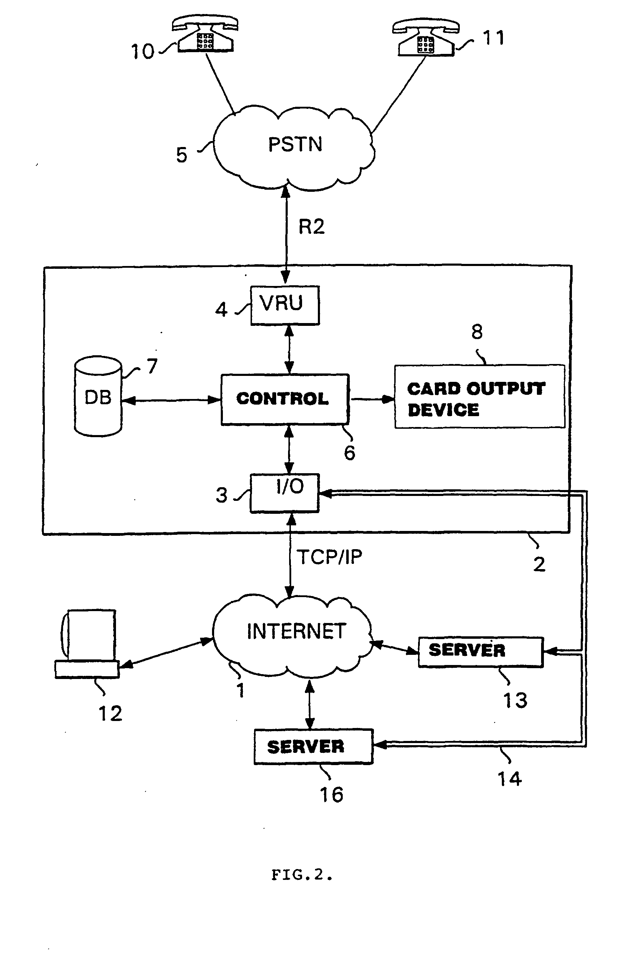

FIG. 2 shows a block diagram of the first preferred embodiment of the telecommunication system according to the invention. The account register visible in FIG. 2 consists of a server, or a computer 2, comprising a connection unit 3 by which it has been connected with the INTERNET-network 1 for example by a TCP/IP telecommunication link.

The account register comprises also a telephone service unit 4 (VRU, Voice Response Unit), by which it has been connected to the public telephone network 5 (PSTN, Public Switched Telephone Network). The connection between the public telephone network 5 and the server 2 can comprise for example a connection according to the national R2 signalling specification or alternatively for instance an ISDN-connection (Integrated Services Digital Network).

The telephone service unit 4 and the connection unit are controlled by the control unit 6, which is also connected with the database 7, in which the actual account register or the accounts are maintained. For the accounts in the database 7 at least the identification number, the secret code (PIN) and the monetary amount available in the account have been marked in the database. Markings of the limitations of use for some accounts can also be made in the database 7, or for instance telephone numbers, which have been called, and these calls cannot be debited from the account in question (as international calls or the ones made to the cellular phone).

When the operator of the account register creates a new account record in the database 7, at least the identification number, the secret code and the available monetary amount, e.g. 100,-, are thus determined for it. This information is registered also by the printer 8 to the outputted account card 4. The account card in question is sold thereafter to the prospective buyer at the price agreed in advance. The buyer of the card can thus utilize the account registered to the account card by the visible identification number and the secret code in it, until the monetary amount addressed to the account has been exhausted.

Alternatively a new account can be generated in the account register 7 by the initiative of the user. When the user by his telephone or the computer terminal selects such an event, the control unit 6 creates a new account in the database, for which it establishes the identification number and the secret code. After this to the user's telephone or terminal is sent a message, by which the identification number and the secret code are delivered to the user and for instance also a certain sum of money, the bank account number and the reference number. When the user after this in an identified way pays the announced sum via his bank to the announced account using the reference number, the account in the account register is activated in such a way that it can be used for the paying of the bills. This may take place so that a special checking bit addressed to the account changes the value, or alternatively for example so that the balance of the account remains zero until the the user has made the bank payment, whereafter the balance of the account is increased in certain relation to the monetary amount paid by the user.

When a person using the telephone 10 utilizing the sound frequency selection (DTMF) wants to call the telephone 11 in such a way that the costs due to the connection will be debited from the account according to the account card bought by him or her, he selects initially the free telephone number of the telephone service unit 4. The telephone service unit 4 advises the user to key in his account number and the secret code, which the telephone service unit sends to the control unit 6. The control unit 6 checks, whether there is any account in the database, the identification number and secret code of which correspond the number and the code keyed by the telephone 10, or whether there is still money available in the account in question. If this is the case, the telephone unit 4 sends to the telephone apparatus 10 a sound message, by which to the customer is announced the sum of money at his disposal and by which he is adviced to key in the number of the B-subscriber he desires. After this the account register 2 creates a connection between the telephone 10 and the telephone extension selected by the subscriber, which can be e.g. the telephone 11. The costs due to the connection are not charged from the holder of the extension 10, but from the account, the identification number of which the customer has entried by the telephone 10.

If the duration of the call made from the telephone to the telephone 11 is so long that the monetary amount available in the account ends up, the telephone service unit 4 of the account register announces this by a sound message, after which it cuts off the connection after a predetermined time period.

According to the invention the user may also utilize the account marked in the account card bought by him via his computer terminal 12 for the payment of the chargeable services selected by him. Or if the user upon scanning through for instance the WWW-pages (World Wide Web) offered in the INTERNET-network discovers that in a specified chargeable WWW-page there is the information he wants to buy, he can pay the service bought by him using the account in the database 7. The chargeable service in question can for example include reading of a certain text or optionally making of a newspaper subscription, whereat the customer can immediately pay by the account in the account register to the service producer the price determined for the text reading or the fee due to the subscription of the annual volume of the newspaper.

In FIG. 2 has been shown t separate computer equipment 13 and 16, both of which are in the data transmission connection with the account register 2. The user can therefore freely select, from which computer equipment he wants to buy the services and pay for these services using the account in the account register regardless of the fact, whether he buys services from the computer equipment 13 or 16 or not.

Or if the customer selects for example a WWW page, the information for which can be found in the server 13, the server 13 asks in the beginning from the customer the identification number and the secret code of his or her account. After the reception of the identification number and the secret code, the server 13 sends a debiting nessage to the account register 2 via the telecommunication link 14. This telecommunication link 14 can for example comprise any connection link, by which the debiting message can be delivered directly to the connection unit 3 of the account register. Optionally the debiting message can be supplied via e.g. the INTERNET-network. The debiting message includes at least the identification number and the secret code of the account entried by the user.

When the connection unit 3 of the account register receives the debiting message, it delivers this message further on to the control unit 6. The control unit 6 checks then, whether there is in the database the account having the identification number and the secret code included in the debiting message. If this account is discovered, the control unit checks subsequently the sum of the available money. If the sum of the money in the discovered account exceeds the monetary amount included in the debiting message, the control unit 6 charges the sum of the money included in the debiting message from the account mentioned in the debiting message. Correspondingly the control unit 6 entries the charging event in the call-log of events 15. Hereby at least the chargeable sum of money is registered into the call-log and also the information, by which it is identified the party, to which the sum in question should paid. The information in question can consist of for example the product identification number needed for the identification of a chargeable service or alternatively for instance of the identification number of the server offering the chargeable service or of its operator. Thereafter the control unit 6 sends to the server the confirmation of the successful payment via the telecommunication link 14.

If, on the contrary, the identification number or the secret code of the account of the debiting message is incorrect or if there is not available money enough in the account, the control unit 2 delivers to the server via the telecommunication link a message announcing the failure of the payment.

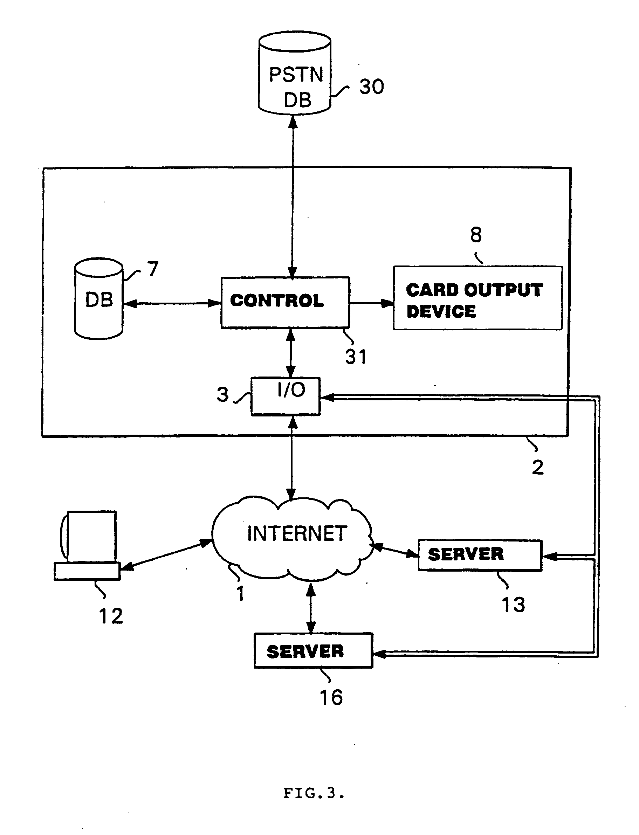

FIG. 3 shows a block diagram of the second preferred embodiment of the telecommunication system according to the invention. The embodiment illustrated in FIG. 3 resembles very much the embodiment shown in FIG. 2, but in the case of FIG. 3 the user buying via his terminal 12 services from the server 13 can select between various optional methods of payment.

When the user selects from the server 13 a chargeable service, the server 13 sends through the INTERNET-network an inquiry to the user's terminal 12 concerning the way by which he wants to pay for this service. There can be several possible useful methods of payment, of which two have been shown in FIG. 3:
- charging the user by increasing the price of the services selected by him to the telephone invoice, whereat the user is adviced to announce his telephone number and the secret code possibly in use; and
- charging the user by the (prepaid) account at his disposal, whereat the user is adviced to announce the identification number and the secret code of his account.

When the server 13 has received from the user the information concerning the selection of the method of payment and the identification numbers associated with it (telephone/account number, secret code), it supplies a debiting nessage to the account register 2 in a way known in itself for example via a data network 14 or the INTERNET-network 1. The information about the method of the payment the user has selected is then included in the debiting message.

The control unit 31 receives the debiting message and entries it into the call-log 15. By the call-log 15 it is possible to find out later on the contents of the arrived debiting messages or inter alia the amount the upkeeper of the server 2 should pay to the parties offering chargeable services for instance via the server 13. Hereby it is advantageous if the debiting message to be sent from the server 13 to the account register 2 includes besides the chargeable sum, identification number of the account and the secret code also among other things:
- A product code for the product the user 12 is paying. By this product code it is for instance possible to find out, to whom the sum charged for the product purchase should be delivered in cases, where various different service producers offers chargeable services via the same server 13.
- The telecommunication address of the user 12, whereat missuses can be prevented in advance in such a way, that if the server 2 repeatedly within a predetermined time period receives debiting messages, including an incorrect secret code, but the same telecommunication address, the account register may reject all the nessages comprising the telecommunication address in question for a predetermined time.
- An identification number indicating the method of payment, whereby the account register 2 may discover, how it should process the debiting message in future.

When the control unit 31 has entried the debiting message to the call-log 15, it then checks the identifying number indicating the method of payment in the debiting message. If the identifying number indicating the method of payment shows that the user wants to pay the chargeable service selected by him by his telephone invoice, the control unit 31 generates nessage sending it further on to the teleoperator addressed by the telephone number delivered by the user for instance via the telephone network. The message in question is deposited then to the teleoperator's system 30, in which it is observed, when the next telephone invoice is sent to the user. If the control unit 31 gets the confirmation concerning the successful payment operation from the teleoperator's system, it delivers a confirmation about the succesful payment to the server 13 via the data network 14.

If the control unit on the contrary finds out on the grounds of the identification number indicating the payment, that the user wants to pay the chargeable service selected by him using the account in the database 7 of the account register, it checks subsequently, whether there is money enough in the account in the database 7 and whether the secret code included in the debiting message corresponds the secret code of the account in question. If this is the case, the control unit 31 debits from the account in question the chargeable sum and sends to the server 13 a confirmation about the successful payment procedure via the datanetwork 14.

It should be understood that the specification above, the figures associated therewith and the following detailed exemplary description connected mostly to the calls and the figures associated therewith are only intended to illustrate the present invention. It is evident that many variations and modifications will be apparent to those skilled in the art. Accordingly it is intended to embrace all such variations and modifications without diverging from the scope and the spirit of the invention determined in the appended claims.

### Example

It is possible to buy a generally applied right for a prepared telecommunication and/or data transmission, e.g. in the form of a preprinted card, via common distribution channels, and the card batches intended for special adaptations can be produced according to the customer's wishes. The service connection is attained by calling the service number free of charge, whereafter the system asks the caller to key in the identification number of the card. In order to impede possible misuses it is also possible to arrange in the system the inquiry of the secret code before the approval of the identification number. The system verifies the validity of the identification number, the amount left of the telecommunication or data transmission right, and the system checks also that no operating teleconnecting link exists for this identification number. After a positive examination result the system tells to the user the balance of the account and asks him to key in the desired number. After the formation of the connection the system controls the costs and charges the balance of the card essentially in real time using the debiting data received from the telenetwork. No charging is directed to the extension, from which the connection is formed. If the connection ends or is ended before the connection right is exhausted, the system deposits the remaining balance for the following uses. If the balance during the connection attains the preset lower limit, a warning signal is given to the user indicating that the connection right is ending. If the balance is exhausted during the connection, the system discharges the connection. The usufructuary right of the identification number is passivated to zero during the balance or after the preset validity time has expired.

A prepaid usufructuary right can be applied for the normal telecommunication and/or data transmission within the limits set by the balance. In special adaptations the usufructuary right can also be limited to concern only the calls to a specified number or numbers or to a certain connection type. In the embodiment, where the objects have been limited, the usufructuary right can be sold and announced instead of the balance in monetary units (= marks) also during the avail connection time. In special adaptations it is also possible to set the guides and notices given during the service to the user of the system relating to the adaptation.

### General description

The main purpose of this method for the collection of debits (called hereafter as the "Prepaid Phone Card Service") is to offer to a customer a prepaid connection time. The card includes a predetermined amount of credit (= balance) that can be used during the connection. The card is paid when it is purchased and no other expenses will be charged from the holder of the card. The actual physical card is needed only for the printing of the card number. When the connection is started, only the card nunber printed on the card, i.e. the identifying number, and the possible secret code are needed.

### 2. Service qualities

The following qualities belong to the Prepaid Phone Card Service paid in advance:
The basic functionality comprises the following functions:
   - the access to the service by a free number
   - the number of the caller determines the language to be used
   - the identification of the card is ended by #
   - means for the simultaneous use of the card for more than one connection event
   - the card number comprises information about the distribution channels
   - the prepaid card (number) is active during a limited time and is automatically passivated on the expiration day
   - the "spoken money" announcement after the identification of the card apprises the available balance
   - the selected object number is announced as a dialling tone (or a voice information), selection is ended by #.
      The object number can also selected the service itself (autodial).
   - the outgoing connection parameters and their control comprise the balance and the debiting information belonging to the call made to the object. number. These parameters determine the permissible maximal connection time.
   - the actual charging data is received from the network
   - the access can be limited to the connection of certain type depending only on the card type
   - the operational time/balance available during the connection is reduced. A warning tone 1 is given, when the limit 1 is attained.
   - the warning tone 2 is sent to the user, when the limit 2 is attained
   - the connection is ended, when the available operational time/balance is ended
   - the debiting record is generated from each connection for checkings
   - after the connection the balance is preserved for subsequent connections
   - the service operator has the access to the cards and the service information in order to update the balance
   - viewing of the connection report/statistics and to establish and nullify the cards.
The additional functionality covers the following things:
   - further connection without a need for the new identification of the cars number
   - the qualification of the PIN-code for securing the legal use of the card
   - the covering of the object number according to the customer needs
   - individualized announcements

### 3. Functions associated with the realization, see FIG.4

### 3.1 Functions included

The functions included are shown in accordance with the ITU-T recommendation Q.1204 Intelligent Network Distributed Functional Plane Architecture. Though these recommendations concern the intelligent network technology, the same basic functions are needed also in the not-IN solutions. In the physical realization these functions may be located in different 5 ways in separate or combined entities.

CCAF (Call Control Agent Function) is an intermediate function of the connection control enabling the access for the user. It contains the interface between the user and the connection control function of the network.

CCF (Call Control Function) is a connection control function in the network taking care of the connection, the coupling process and the control.

SSF (Service Switching Function) is a service coupling function, which together with the CCF takes care of many functions needed between the CCF and the service control function (= starting and connection coupling etc.).

SRF (Specialized Resource Function) takes care of special subfunctions needed for the performance of the services (= marking reception, announcements, speech generators).

SCF (Service Control Function) is a function commanding the requested service upon performing the connection control functions.

SDF (Service Data Function) includes customer- and network related data for the access thereto of the SCF, when the service is made in real time.

All the above functions are controlled, updated and/or otherwise managed by the SMF.

SMF (Service Management Function) enables the spreading and upkeep of the services and makes possible the support of the activities being performed. It allows the coordination of the debiting and the statistical information attained from the SCF and also the working up of the information data distributed to the SDF.

SCEF (Service Creation Environment Function) makes possible the determination, development, testing and entrying the performed services to the SMF. The delivery of this function may include service logic, service control logic, supplementary information for the service data and the starting data of the service.

SMAF (Service Management Access Function) forms an extension between the service controls and the SMF.

There is also a generation and control function of the card number controlling the number space reserved for this service. It generates numbers according to certain generation rules and combines the service data (as the initial balance, card expiration date, announcement codes) associated with them.

The service logic has been created by the SCEF and spread by the SMF. All the service information is sent from the SMF to the other functions.

The functions mentioned above can be divided into different groups. CCAF, CCF, SSF, SRF, SCF and SDP form a group with the name "service performance functions", because they are connected to each connection processing. SNF, SMAF and SCEF form a group with the name "service control functions", cause they are associated with the control service, service data, card data and service creation. The number generation function is used for the production o car numbers, but it is not in any way associated with the service itself. Also some individualized service functions can be used, needed for the communication with the customer (= a customer serving person) and for the utilization of the administrative possibilities offered by the service control functions. The customer service functions may also determine the amount of the card required for the number generation function. The relations between these groups are shown in FIG. 4.

### 3.2 Connection processing

The hereby referred connection processing events have been shown in FIGS. 5 and 6. In each stage during the processing the service performance is ended, if the user (A-subscriber) closes the connection.

### Service access by a free number

When the processing of the prepaid connection is started, CCAF announces of the call coming to the CCF. CCF and SSF announce together that the call is prepaid (the triggering key is the B-number = the service access number) and the control of the SCF is needed in order to achieve a successful connection. SCF analyses the B-number and connects it to the logic of the Prepaid Phone Card Service -service. SCF is developing a counter following the amount of the future connections and starting the service logic. The charging of the A-subscriber has been prevented (so that the SSF has been controlled to preserve each measuring pulse intended for the delivery to the A-subscriber). SCF controls the SRF to give a welcome wish.

### Identification

After the welcome wish the service asks the user to give the identification number. SCF controls the SRF to express the request and is prepared to receive the DMTF-characters ended with #. SCF confirms/compares the announced identification number with the identification numbers registered into the e compatibility is obvious, the service performance is continued. SCF ensures that no connection is operating with the same identifying number. This is made in order to avoid misleading balance announcements and charging errors. If no connection is operating by the announced identifying number, the process is continued. In other cases the connection is cut off. If the user does not give all the required characters or gives too many of them, which leads to a non-compatible state in the number selection, the opportunity for a new announcement of the characters is given. The identification number can be given N times. If the reception time of the characters is exhausted, the contact processing is cut off.

The PIN/secret code request and confirmation can optionally be included in the service.

When the SCF receives a useful identification, it searches the customer data connected with it from the SDF. To the customer data belongs the card balance, expiration day and selectively individual announcement codes and the object number.

### Operational time

After the user has been identified the service checks the system date and compares it with the expiration date. If the usufructuary right is no more valid (expiration date has already been reached) the SRF gives the announcement, the connection event is generated to the call-log and the connection processing is ended. In another case the processing is continued.

### 'Spoken money' announcement

SCF continues the contact processing by controlling the SRF to announce the remaining balance. optionally an individual announcement can be given.

### Selection of the object number

If the identified user enables only one object, the object number is given from the SDF data. The user cannot choose any number and the service control continues by checking, whether there is enough balance for the forming of the connection.

If the identifying number/secret code enables many object numbers, the SCF guides the SRF to ask the user to give the object number. SRF receives the characters and sends them further to the SCF. SCF analyzes the characters and makes some confirmation procedures or changes if necessary. The selective object number can be covered in order to impede the calls to a specified number. If desired, also an announcement for the giving of the new object number can be informed.

### Formation of a connection

If the number is permissible, the SCF verifies the balance. If there is enough balance for this connection, the SSF creates a connection to the object number and forms the connection. At the same time the SCF or the SSF begins to control the used time/balance.

If the object number is reserved, the service can selectively offer a further connection.

If the SCF (SSF) discovers that the balance is being exhausted (the first limit value is attained), the SRF gives a warning announcement to the A-subscriber, but the connection can continue. A second warning is given, when the second limit value is attained. After the second warning announcement the user must rapidly end the connection or otherwise the service cut it automatically off. After the connection is ended, a report is created into the call-log and is brought for the deposition (to SDF or elsewhere). The call-log record includes critical information about the connection, as the starting time, ending time, used balance/time, A-number, C-number and the remaining balance.

When the connection is normally ended (the A-subscriber closes the connection and some balance is left) the remaining balance is deposited to the SDF for future use.

The service can selectively offer a further connection. This can be introduced after the C-subscriber closes the connection or some other trigger information is attained. First the SCF (SSF) generates a conventional connection record into the call-log and then the SRF guides the user to answer, whether he wants the further connection or not. If the answer is positive, the service continues the asking for the object number. In a negative case the service is ended.

### 4. Use of the cards

### 4.1 Card types

Cards can be made for different purposes:
- cards for one object
- cards for limited objects
- cards for free objects

Cards for one object or limited objects offer a different user interface than the cards for free objects. Cards for one object can give individual announcements and perform simple number modifications after the card number has been given. The connection is routed to a predetermined object (customer service of the publisher, technical support etc.), which enables a limited amount of the free connection time. The object number will not be informed to the user.

With the cards for limited objects the user can take a contact only to a few object numbers, or the C-numbers have been prevented to come out, e.g. 0700-numbers.

Cards for the free numbers do not limit the C-numbers. The service logic may confirm the given number by requesting new entry, if a useless or wrong number is in question. The user can then make further connections, until the total balance is exhausted.

### 4.2 Possible ways to use a prepaid card

The cards can be made suitable for calling without any need for coins from the telephones liable to charges. Because the charging is not directed to the A-number in question, the connections/calls can be taken from any telephone supporting the DTMF (including the public telephones liable to charges).

The cards can be used for the sales promoting purposes. The publisher can ask several cards from the service offerer and include an individualized announcement to the connection processing procedure. Such 'customized' cards can thus be given out for example by closing them into a product package. The customer buying the publisher's products gets the card connected with the product and hears thus when the card is used an announcement telling something about the publisher. The connections can be guided automatically to the customer service of the publisher, when a card for one object is in question.

### 5. User interface

### 5.1 Brief and simple explanation for the use of the service The user makes a call to the call number. The service gives a welcome announcement. The user entries the identification number and/or the secret code and the object number. The connection can be continued, until the card balance is exhausted. After the balance has been used up, the card is automatically passivated.

### 5.2 More detailed explanation of the user interface

FIG. 7 depicts the user interface. The lines 1 refer to the so of the free object or limited objects. Lines 2 refer to the cards for one object, whereat these cards have predetermined object numbers.

The user procedure begins, when the user selects the call number of a specified prepaid service. After the call number has been chosen, the user hears the welcone announcement advicing the use of the service procedure (e.g. "Welcome to the xxx, please give the identification number and the secret code"). When the card number has been keyed in, the user hears some individual announcement and the amount of the remaining balance (e.g. "You have xxx balance/minutes/amount left").

Then, if the card is intended for one object, the call is connected. If the object number has not been specified, the service asks for the C-number. If the given C-number is not in the table of non-permissible numbers, the connection is formed. In other cases the service asks the user to select the number anew.

If the object number is reserved, the service can selectively offer a further connection.

During the connection a checking is made, whether the remaining balance is still sufficient. If it reaches a certain limit value (2 limit values) a warning tone or tones is given to the A-subscriber. The warning tone tells that the balance is being exhausted.

A further connection can be allowed, if the card has not been marked as a card for one object. After the C-subscriber has closed the line, the service asks from the A-subscriber, whether he or she wants a further connection. If the answer is yes, the service requests the C-number (without asking the card number).

If a further connection is not requested, the remaining bated n the service ended.

If the balance is exhausted during the connection, a warning tone is given to indicate that the connection must be ended during a few seconds. After the remaining time the connection is cut off and the execution of the service is stopped.

### 6. Control/generation of the card number

Card numbers, i.e. identification number/secret codes, are generated by the generation and control function of the card. Numbers and the information associated with them (balance, expiration day, selective individual announcement codes) will be sent to the SMF, which installs them to the SDF so that the SCF can search this information in real time. The card numbers can also be cancelled by using this control function.

Card numbers are assembled in such a way that the information concerning the distribution channel of the card can be found from the number.

### 7. Customer service adaptation

The basic idea of the customer service adaptation is to create for the customer service personnel a kind of a viewing tool for the connection event log and also the means to change the remaining balance, if necessary. By this tool the customer service personnel may handle the customer complaints and selectively the passive cards.

The adaptation makes it possible to check the connection log events associated with a specified card. A card number can be given and the time period can be determined, from which the events are searched for. As a result of the search connections are attained, which have been made by using the card in question. In the report are shown the connection dates, coupling time, used balance and also the A- and C-numbers and the remaining balance after each connection. Based on this information the customer service personnel may discuss with the complainer in order to solve a possible discrepancy concerning for example the used balance.

The search is activated by the SMF starting the inquiry event from the SDF (or some other external database). The requested log events are collected and sent to the SMF, who then presents them to the SMAF.

When the balance must be changed, the customer service personnel determines the desired balance by using the SMAF and the updating order is sent from the SMF to the SDF.

By using the customer service adaptation it is also possible to update the 'black.list' of generally non-permissible object numbers, if these exist.

### 8. Collection of statistical data

The SSF generates 'usual' CDR file after each connection, but because CDR-tickets are not collected and indicated immediately after the connection (because of the system settings), they are not used for the debiting purposes. CRD-tickets can be used for informative purposes concerning the use of the whole service or a specified card type (e.g. sales promotion cards). CDR-tickets can also be utilized as a security storage for a long time period of connection events.

More statistical updating information concerning the use of the service can be collected by utilizing a statistical application functioning in the SMF and registering different the received calls (the counrealization of the service amount of wrong card number things, as the total amount of ter steps off always, when the logic begins) and possibly the PIN-pairs etc.

## Claims

1. A method for charging a user of a telecommunication network, comprising the steps of:
providing one or more chargeable services on at least one computer equipment, each computer equipment maintained by a service provider,
providing a user with an identification number and a first secret code associated with a prepaid account, said account residing in an account register separate from said computer equipment(s) of the service provider(s), said account register maintained by an account operator, and
conveying the provided identification number and first secret code from the user to a selected service provider in exchange for a service to be purchased,
**characterized in that** the method further comprises the steps of:
providing the user with a second secret code associated with said prepaid account, to be used for changing the first secret code,
transmitting from the computer equipment of the selected service provider to the account register via a telecommunication link a debiting message comprising the conveyed identification number, the conveyed first secret code, the sum to be charged for the service to be purchased, and a product code for the service to be purchased,
debiting at the register the account associated with the received identification number and first secret code for the received sum, and
transmitting from the account register to the computer equipment of the selected service provider a confirmation message in response to a successful debit.

2. A method according to claim 1, **characterized in that** the producer of said service makes services regardless of the telecommunication system.

3. A method according to claim 1 or 2, **characterized in that** to the user is given the identification number and the first secret code of an account in the account register connected with the telecommunication network:
- by establishing a new account in the account register and determining the identification number and the first secret code for this account and also the sum of money available in the account;
- by giving to the user the identification number and the first secret code of the new account against the predetermined payment, which payment will be collected in the way known in itself, so that the user knowing the identification number and the first secret code of the account may use the account for paying the bills, until the monetary amount available in the account has been exhausted.

4. A method according to claim 1, **characterized in that** the user is charged in real time by sending a new debiting message to the account register always when the user activates a new chargeable service.

5. A method according to claim 1, **characterized in that** when the user selects a service based on time charging, new debiting messages are repeatedly sent with predetermined time intervals, whereby by each debiting message the user is charged in advance for the subsequent predetermined time period.

6. A method according to claim 1, **characterized in that** when the user selects a service based on time charging, the account register is continuously updated, preferably with very short time intervals, which are advantageously between a few seconds and a few milliseconds, by debiting messages, whereby by each debiting message the user is charged in advance for the time of the predetermined time period, so that the charging takes essentially place in real time.

7. A method according to claim 1, **characterized in that** it is used in this method a customer-related identification number and a prepaid compensation included in it, that for the formation of the connection the caller calls to a predetermined call number and delivers from the teleterminal equipment his identification number and/or the first secret code, whose validity and the amount of the remaining limited value included in them are verified, whereafter the caller selects the desired call number.

8. A telecommunication system for charging a user, comprising:
at least one computer equipment (13, 16) each maintained by a service provider for providing one or more chargeable services, and
a subscriber device (12) for conveying a provided identification number and first secret code from a user to a selected service provider in exchange for a service to be purchased,
**characterized in that** the system further comprises:
an account register (2) comprising prepaid accounts each associated with an identification number and a first secret code, said account register located separate from said computer equipment(s) of the service provider(s) and said account register maintained by an account operator, said identification numbers and first secret codes to be provided to users, and
means (3, 6, 7) disposed in the account register for receiving from the computer equipment of the selected service provider via a telecommunication link a debiting message comprising the conveyed identification number, the conveyed first secret code, the sum to be charged for the service to be purchased, and a product code for the service to be purchased, for debiting the account associated with the received identification number and first secret code for the received sum, and for transmitting to said computer equipment of the selected service provider a confirmation message in response to a successful debit, and that
the subscriber device (12) is further arranged to select an optional payment method instead of the prepaid account, and to convey an identification code associated with the selected optional payment method instead of the identification number and first secret code associated with the prepaid account from the user to the selected service provider in exchange for the service to be purchased, and
the account register (2) is further arranged to include a second secret code associated with said prepaid account, to be provided to a user for changing the first secret code.

9. A telecommunication system according to claim 8, **characterized in that** said telecommunication system forms a part of the INTERNET-network (1), whereby said computer equipment (13) and the account register (2) are composed of servers connected with the INTERNET-network, and that the computer equipment (13) has been adapted to send a debiting message via the INTERNET-network (1) or a corresponding telecommunication network to the account register (2) and to receive from the account register via the INTERNET-network or a corresponding telecommunication network a confirmation about the remittance or the failure of the payment attempt.

10. A telecommunication system according to claim 8 or 9, **characterized in that** the account register (2) has also been connected with a public telephone network (5), whereby the account register comprises means for charging the costs due to a call made from a selective telephone extension (10) from the account in the account register (2), if the identification number and the first secret code of the account delivered from the telephone extension in question correspond the identification number and the first secret code of an account in the account register (2) and the sum of money available in the account in question exceeds the costs caused by the call.

## Patentansprüche

1. Verfahren zur Benutzergebührabrechnung in einem Telekommunikationsnetzwerk, welches die Schritte aufweist:
Liefern bzw. Zur-Verfügung-Stellen eines oder mehrerer gebührenpflichtiger Dienste auf wenigstens einem Computergerät, wobei jedes Computergerät durch einen Service Provider bzw. Diensteanbieter gewartet bzw. betrieben wird, Liefern bzw. Zur-Verfügung-Stellen einer Identifikationsnummer und eines ersten geheimen Codes, welcher mit einem Vorauszahlungskonto verbunden ist, wobei das Konto in einem Kontoregister getrennt von dem Computergerät (den Computergeräten) des Service Providers (der Service Provider) angeordnet ist, wobei das Kontoregister durch einen Konto-Operator gewartet bzw. geführt wird, und
Übermitteln der gelieferten bzw. zur Verfügung gestellten Identifikationsnummer und des ersten geheimen Codes vom Nutzer an einen ausgewählten Service Provider als Gegenleistung für einen Dienst, welcher zu kaufen ist,
**dadurch gekennzeichnet, dass** das Verfahren ferner die Schritte aufweist:
dem Nutzer Liefern bzw. Zur-Verfügung-Stellen eines zweiten geheimen Codes, welcher mit dem Vorauszahlungskonto verbunden ist, welcher zum Ändern des ersten geheimen Codes zu nutzen ist,
Übertragen von dem Computergerät des ausgewählten Service Providers an das Kontoregister über eine Telekommunikationsverbindung einer Belastungsnachricht, welche die übermittelte Identifikationsnummer, den übermittelten ersten Geheimcode, die Summe, welche für den zu kaufenden Dienst zu belasten bzw. zu erheben ist, und einen Produktcode für den Service, welcher zu kaufen ist, aufweist,
Belasten des Kontos im Register, welches mit der empfangenen Identifikationsnummer und dem ersten geheimen Code für die erhaltene Summe verbunden ist, und
Übertragen einer Bestätigungsnachricht aus dem Kontoregister an das Computergerät des ausgewählten Service Providers als Antwort auf eine erfolgreiche Belastung.

2. verfahren nach Anspruch 1, **dadurch gekennzeichnet, dass** der Hersteller dieses Dienstes Dienste ungeachtet des Telekommunikationssystems durchführt.

3. Verfahren nach Anspruch 1 oder 2, **dadurch gekennzeichnet, dass** dem Nutzer die Identifikationsnummer und der erste geheime Code eines Kontos in dem Kontoregister gegeben wird, welches mit dem Telekommunikationsnetzwerk verbunden ist:
- indem ein neues Konto in dem Kontoregister erstellt wird und indem die Identifikationsnummer und der erste geheime Code für dieses Konto und auch die Geldsumme, welche in dem Konto zur Verfügung steht, bestimmt wird;
- indem dem Nutzer die Identifikationsnummer und der erste geheime Code des neuen Kontos entsprechend der vorher bestimmten Bezahlung gegeben wird, wobei die Bezahlung auf in sich selbst schlüssige Weise eingesammelt bzw. eingeholt wird, so dass der Nutzer, welcher die Identifikationsnummer und den ersten geheimen Code des Kontos kennt, das Konto zum Zahlen der Rechnungen nutzen kann, bis der zur Verfügung stehende Geldbetrag in dem Konto erschöpft ist.

4. Verfahren nach Anspruch 1, **dadurch gekennzeichnet, dass** der Nutzer in Echtzeit durch Senden einer neuen Belastungsnachricht an das Kontoregister immer belastet werden kann, wenn der Nutzer einen neuen gebührenpflichtigen Dienst aktiviert.

5. Verfahren nach Anspruch 1, **dadurch gekennzeichnet, dass**, wenn der Nutzer einen auf Zeitgebühr basierenden Dienst auswählt, neue Belastungsnachrichten, wiederholt mit vorher festgelegten Zeitintervallen gesendet werden, wobei mit jeder Belastungsnachricht der Nutzer im Voraus für die nachfolgende, vorher festgelegte Zeitperiode belastet wird.

6. Verfahren nach Anspruch 1, **dadurch gekennzeichnet, dass**, wenn der Nutzer einen Dienst, welcher auf Zeitgebühr beruht, nutzt, das Kontoregister fortlaufend durch Belastungsnachrichten aktualisiert wird, vorzugsweise in sehr kurzen Zeitintervallen, welche vorteilhafterweise zwischen wenigen Sekunden und wenigen Millisekunden liegen, wobei durch jede Belastungsnachricht der Nutzer im Voraus für die Zeit der vorher festgelegten Zeitperiode belastet wird, so dass das Belasten bzw. Verrechnen im Wesentlichen in Echtzeit stattfindet.

7. Verfahren nach Anspruch 1, **dadurch gekennzeichnet, dass** in diesem Verfahren eine kundenbezogene Identifikationsnummer genutzt wird und in ihm eine vorausbezahlte Kompensation eingeschlossen ist, so dass zum Erstellen der Verbindung der Anrufer eine vorher festgelegte Rufnummer anruft und von dem Tele-Endgerät seine Identifikationsnummer und/oder den ersten geheimen Code liefert, dessen Gültigkeit und der Betrag bzw. die Höhe des verbleibenden limitierten Wertes bzw. Betrages, welche in diesen beinhaltet sind, verifiziert werden, wonach der Anrufer die gewünschte Rufnummer auswählt.

8. Telekommunikationssystem für Benutzergebührenabrechnung, welches aufweist:
wenigstens ein Computergerät (13, 16), welches von einem Service Provider zum Liefern einer oder mehrerer gebührenpflichtiger Dienste gewartet bzw. betrieben wird, und
eine Teilnehmervorrichtung (12) zum Übermitteln einer gelieferten Identifikationsnummer und eines ersten geheimen Codes von einem Nutzer zu einem ausgewählten Service Provider als Gegenleistung für einen Dienst, welcher zu kaufen ist,
**dadurch gekennzeichnet, dass** das System ferner aufweist:
ein Kontoregister (2), welches Vorauszahlungskonten aufweist, wobei jedes mit einer Identifikationsnummer und einem ersten geheimen Code verbunden ist, wobei das Kontoregister getrennt von dem Computergerät (den Computergeräten) des Service Providers (der Service Provider) angeordnet ist, und das Kontoregister durch einen Konto-Operator gewartet bzw. betrieben wird, wobei die Identifikationsnummern und die ersten geheimen Codes den Nutzern zur Verfügung zu stellen sind, und
eine vorrichtung (3, 6, 7), welche in dem Kontoregister angeordnet ist, um von dem Computergerät des ausgewählten Service Providers über eine Telekommunikationsverbindung eine Belastungsnachricht zu empfangen, welche die übermittelte Identifikationsnummer, den übermittelten ersten Geheimcode, die zu belastende Summe für den Dienst, welcher zu kaufen ist, und einen Produktcode für den Dienst, welcher zu kaufen ist, aufweist, um das Konto, welches mit der empfangenen Identifikationsnummer und dem ersten geheimen Code für die empfangene Summe verbunden ist, zu belasten, und zum Übertragen einer Bestätigungsnachricht in Antwort auf eine erfolgreiche Belastung an das Computergerät des ausgewählten Service Providers, und dass
die Teilnetunervorrichtung (12) ferner angeordnet ist, um ein wählbares Bezahlungsverfahren anstatt des Vorauszahlungskonto auszuwählen und einen Identifikationscode zu übermitteln, welcher mit dem ausgewählten optionalen Zahlungsverfahren verbunden ist, anstatt der Identifikationsnummer und dem ersten geheimen Code, welche mit dem Vorauszahlungskonto vom Nutzer zum ausgewählten Service Provider als Gegenleistung für den Dienst, welcher zu kaufen ist, verbunden sind und
das Kontoregister (2) ist ferner angeordnet, um einen zweiten geheimen Code zu beinhalten, welcher mit dem Vorauszahlungskonto verbunden ist, welcher dem Nutzer zum Ändern des ersten geheimen Codes zu liefern bzw. zur Verfügung zu stellen ist.

9. Telekommunikationssystem nach Anspruch 8, **dadurch gekennzeichnet, dass** das Telekommunikationssystem einen Teil des INTERNET-Netzwerkes (1) darstellt, wobei das Computergerät (13) und das Kontoregister (2) aus Servern besteht, welche mit dem INTERNET-Netzwerk verbunden sind, und dass das Computergerät (13) angepasst wurde, um eine Belastungsnachricht über das INTERNET-Netzwerk (1) oder ein entsprechendes Telekommunikationsnetzwerk an das Kontoregister (2) zu senden und von dem Kontoregister über das INTERNET-Netzwerk oder ein entsprechendes Telekommunikationsnetzwerk eine Bestätigung über die Überweisung oder das Fehlschlagen des Bezahlungsversuches zu erhalten.

10. Telekommunikationssystem nach Anspruch 8 oder 9, **dadurch gekennzeichnet, dass** das Kontoregister (2) auch mit einem öffentlichen Telefonnetzwerk (5) verbunden wurde, wodurch das Kontoregister eine Vorrichtung zum Belasten der Kosten aufgrund eines Gespräches aufweist, welches von einem selektiven Telefonanschluss (10) geführt wurde, von dem Konto in dem Kontoregister (2), wenn die Identifikationsnummer und der erste geheime Code des Kontos, welcher von dem betreffenden Telefonanschluss geliefert wurde, mit der Identifikationsnummer und dem ersten geheimen Code eines Kontos in dem Kontoregister (2) übereinstimmt und die verfügbare Geldsumme in dem betreffenden Konto die Kosten übersteigt, welche durch den Anruf verursacht wurden.

## Revendications

1. Procédé pour facturer un utilisateur d'un réseau de télécommunication, comprenant les étapes consistant à :
fournir un ou plusieurs services à facturer sur au moins un équipement informatique, chaque équipement informatique étant géré par un prestataire de services,
fournir à l'utilisateur un numéro d'identification et un premier code secret associé à un compte prépayé, ledit compte se trouvant dans un enregistreur de compte séparé dudit (desdits) équipement(s) informatique(s) du (des) prestataire(s) de services, ledit enregistreur de compte étant géré par un opérateur de compte, et
transférer le numéro d'identification et le premier code secret fournis de l'utilisateur vers un prestataire de services sélectionné en échange d'un service à acheter,
**caractérisé en ce que** le procédé comprend en outre les étapes consistant à :
fournir à l'utilisateur un second code secret associé audit compte prépayé, à utiliser pour modifier le premier code secret,
transmettre depuis l'équipement informatique du prestataire de services sélectionné vers l'enregistreur de compte par une liaison de télécommunication un message de débit comprenant le numéro d'identification transféré, le premier code secret transféré, la somme à facturer pour le service à acheter et un code produit pour le service à acheter,
débiter sur l'enregistreur le compte associé au numéro d'identification et au premier code secret reçus de la somme reçue, et
transmettre depuis l'enregistreur de compte vers l'équipement informatique du prestataire de services sélectionné un message de confirmation en réponse à un débit ayant abouti.

2. Procédé selon la revendication 1, **caractérisé en ce que** le fournisseur dudit service produit des services indépendamment du système de télécommunication.

3. Procédé selon la revendication 1 ou 2, **caractérisé en ce que** l'utilisateur reçoit le numéro d'identification et le premier code secret d'un compte dans un enregistreur de compte connecté au réseau de télécommunication :
- en créant un nouveau compte dans l'enregistreur de compte et en déterminant le numéro d'identification et le premier code secret pour ce compte et aussi la somme d'argent disponible sur le compte ;
- en donnant à l'utilisateur le numéro d'identification et le premier code secret du nouveau compte contre le paiement prédéterminé, lequel paiement sera encaissé par un moyen connu de lui-même, afin que l'utilisateur connaissant le numéro d'identification et le premier code secret du compte puisse utiliser le compte pour payer les factures, jusqu'à ce que le montant d'argent disponible sur le compte ait été consommé.

4. Procédé selon la revendication 1, **caractérisé en ce que** l'utilisateur est facturé en temps réel en envoyant un nouveau message de débit à l'enregistreur de compte toujours quand l'utilisateur active un nouveau service à facturer.

5. Procédé selon la revendication 1, **caractérisé en ce que** lorsque l'utilisateur sélectionne un service facturé à la durée, de nouveaux messages de débit sont envoyés sans cesse avec des intervalles de temps prédéterminés, moyennant quoi, pour chaque message de débit, l'utilisateur est facturé d'avance pour la période de temps prédéterminée suivante.

6. Procédé selon la revendication 1, **caractérisé en ce que** lorsque l'utilisateur sélectionne un service facturé à la durée, l'enregistreur de compte est mis à jour en permanence, de préférence dans des intervalles de temps très brefs, qui sont compris avantageusement entre quelques secondes et quelques millisecondes, par des messages de débit, moyennant quoi pour chaque message de débit, l'utilisateur est facturé d'avance pour la durée de la période de temps prédéterminée, de telle sorte que la facturation ait lieu pour l'essentiel en temps réel.

7. Procédé selon la revendication 1, **caractérisé en ce qu'**il est fait appel dans ce procédé à un numéro d'identification lié au client et à une compensation prépayée incluse dans le procédé, que pour la mise en place de la connexion le demandeur appelle un numéro d'appel prédéterminé et fournit depuis l'équipement terminal de télécommunication son numéro d'identification et/ou le premier code secret, dont la validité et le montant limité restant compris sont vérifiés, après quoi le demandeur sélectionne le numéro d'appel désiré.

8. Système de télécommunication pour facturer un utilisateur, comprenant :
au moins un équipement informatique (13, 16) chacun étant géré par un prestataire de services pour fournir un ou plusieurs services à facturer, et
un dispositif d'abonné (12) pour transférer un numéro d'identification et un premier code secret fournis d'un utilisateur vers un prestataire de services sélectionné en échange d'un service à acheter,
**caractérisé en ce que** le système comprend en outre :
un enregistreur de compte (2) comprenant des comptes prépayés, chacun étant associé à un numéro d'identification et à un premier code secret, ledit enregistreur de compte étant séparé dudit (desdits) équipement(s) informatique(s) du (des) prestataire(s) de services et ledit enregistreur de compte étant géré par un opérateur de compte, lesdits numéros d'identification et premiers codes secrets étant à fournir aux utilisations, et
des moyens (3, 6, 7) disposés dans l'enregistreur de compte pour recevoir depuis l'équipement informatique du prestataire de services sélectionné par une liaison de télécommunication un message de débit comprenant le numéro d'identification transféré, le premier code secret transféré, la somme à facturer pour le service à acheter, et un code produit pour le service à acheter, pour débiter le compte associé au numéro d'identification et au premier code secret reçus de la somme reçue, et pour transmettre audit équipement informatique du prestataire de services sélectionné un message de confirmation en réponse à un débit ayant abouti, et que
le dispositif d'abonné (12) est en outre disposé pour sélectionner une méthode de paiement facultative à la place du compte prépayé, et pour transférer un code d'identification associé à la méthode de paiement facultative sélectionnée à la place du numéro d'identification et du premier code secret associé au compte prépayé de l'utilisateur vers le prestataire de services sélectionné en échange du service à acheter, et
l'enregistreur de compte (2) est en outre disposé pour comprendre un second code secret associé audit compte prépayé, à fournir à l'utilisateur pour modifier le premier code secret.

9. Système de télécommunication selon la revendication 8, **caractérisé en ce que** ledit système de télécommunication forme une partie du réseau Internet (1), moyennant quoi ledit équipement informatique (13) et l'enregistreur de compte (2) sont constitués de serveurs connectés au réseau Internet, et que l'équipement informatique (13) a été adapté pour envoyer un message de débit par le réseau Internet (1) ou un réseau de télécommunication correspondant vers l'enregistreur de compte (2) et pour recevoir de l'enregistreur de compte par le réseau Internet (1) ou un réseau de télécommunication correspondant une confirmation au sujet du règlement ou de l'échec de la tentative de paiement.

10. Système de télécommunication selon la revendication 8 ou 9, **caractérisé en ce que** l'enregistreur de compte (2) a aussi été connecté à un réseau de téléphone public (5), moyennant quoi l'enregistreur de compte comprend des moyens pour facturer les coûts dus à l'appel effectué depuis une extension téléphonique supplémentaire sélective (10) depuis le compte d'un enregistreur de compte (2), si le numéro d'identification et le premier code secret du compte fournis depuis l'extension téléphonique supplémentaire en question correspondent au numéro d'identification et au premier code secret d'un compte dans l'enregistreur de compte (2) et si la somme d'argent disponible dans le compte en question dépasse les coûts occasionnés par l'appel.
